(19) Europäisches Patentamt
European Patent Office
Office européen des brevets

(11) Veröffentlichungsnummer: **0 436 894 A2**

# (12) EUROPÄISCHE PATENTANMELDUNG

(21) Anmeldenummer: **90124858.3**

(22) Anmeldetag: **20.12.90**

(51) Int. Cl.5: **C08L 77/00**, C08K 5/20, C08K 5/21

(30) Priorität: **11.01.90 DE 4000626**

(43) Veröffentlichungstag der Anmeldung: **17.07.91 Patentblatt 91/29**

(84) Benannte Vertragsstaaten: **DE FR GB IT**

(71) Anmelder: **BAYER AG**
**W-5090 Leverkusen 1 Bayerwerk(DE)**

(72) Erfinder: **Heinz, Hans-Detlef, Dr.**
**Breslauer Strasse 31**
**W-4150 Krefeld(DE)**
Erfinder: **Döring, Joachim, Dr.**
**Am Alten Broich 22**
**W-4018 Langenfeld(DE)**
Erfinder: **Schmitt, Walter, Dr.**
**Am Konebusch 5a**
**W-4040 Neuss 21(DE)**
Erfinder: **Pielartzik, Harald, Dr.**
**Doerperhofstrasse 39**
**W-4150 Krefeld(DE)**

## (54) Polyamid-Formmassen mit verbesserter Verarbeitbarkeit.

(57) Die Erfindung betrifft Polyamid-Formmassen mit verbesserter Verarbeitbarkeit, ein Verfahren zu ihrer Herstellung, ihre Verwendung zur Herstellung von Formteilen, Folien, Fasern, bzw. zur Herstellung von Verbundwerkstoffen, sowie die aus diesen Formmassen hergestellten Formteile, Folien, Fasern, Halbzeuge, Verbundwerkstoffe und andere Körper. Die Erfindung ist gekennzeichnet durch die Mitverwendung geringer Mengen spezieller Amide und/oder Harnstoffe, durch welche den Massen eine deutlich verbesserte Fließfähigkeit verliehen wird.

EP 0 436 894 A2

## POLYAMID-FORMMASSEN MIT VERBESSERTER VERARBEITBARKEIT

Die Erfindung betrifft Polyamid-Formmassen mit verbesserter Verarbeitbarkeit, ein Verfahren zu ihrer Herstellung, ihre Verwendung zur Herstellung von Formteilen, Folien, Fasern, bzw. zur Herstellung von Verbundwerkstoffen, sowie die aus diesen Formmassen hergestellten Formteile, Folien, Fasern, Halbzeuge, Verbundwerkstoffe und andere Körper. Die Erfindung ist gekennzeichnet durch die Mitverwendung geringer Mengen spezieller Amide und/oder Harnstoffe, durch welche den Massen eine deutlich verbesserte Fließfähigkeit verliehen wird.

Für die Verarbeitung von Thermoplasten im Spritzguß ist eine ausreichend niedrige Schmelzviskosität, ein gutes Entformungsverhalten sowie auch, bei teilkristallinen Thermoplasten, eine Kontrolle der Kristallisationsgeschwindigkeit von größter Bedeutung. Zu hohe Schmelzviskositäten können die genaue Abbildung der Form sehr erschweren oder sogar unmöglich machen. Bei schlechtem Entformungsverhalten können die Teile bei der Entformung kleben oder sich verwerfen. Bei unkontrollierter Kristallisation kann zum Beispiel die Kristallisation einsetzen, bevor die Form vollständig gefüllt ist, was zu schlechten mechanischen Eigenschaften und Oberflächen geringer Qualität führen kann. Die Kontrolle der Verarbeitbarkeit bezüglich Schmelzviskosität, Entformungsverhalten und Kristallisation ist also für die Verarbeitung von Thermoplasten von größter Bedeutung.

Polyamide (PA) sind eine seit vielen Jahren für eine Vielzahl praktischer Anwendungen bewährte Klasse von Polymeren, die nach verschiedenen Verfahren hergestellt werden können, die aus sehr unterschiedlichen Polyamidbildenden Bausteinen synthetisiert werden können und die im speziellen Anwendungsfall, allein oder auch in Kombination mit Verarbeitungshilfsmitteln, polymeren Legierungspartnern oder auch mineralischen Verstärkungsmaterialien (wie z.B. Füllstoffe oder Glasfasern), zu Werkstoffen mit speziell eingestellten Eigenschaftskombinationen ausgerüstet werden können. So werden Polyamide in großen Mengen zur Herstellung von Fasern, Kunststoff-Formteilen und Folien, aber auch z.B. als Schmelzkleber und Hilfsmittel in einer Vielzahl von Anwendungen technisch verwendet.

Übliche unverstärkte Spritzgußtypen fließen i. a. ausreichend gut, jedoch sinkt die Fließfähigkeit beim Übergang zu verstärkten Typen und/oder Legierungen drastisch. Dies ist von besonderem Nachteil, da insbesondere verstärkte PA bzw. PA-Legierungen hervorragende mechanische Eigenschaften aufweisen. Diese erniedrigte Fließfähigkeit kann somit den Einsatz von Polyamid-Formmassen limitieren. Es wäre daher wünschenswert, diesen Nachteil zu überwinden.

Gleitmittel für Polyamide sind bekannt, z.B. Siliconöle, Stearinsäure und ihre Calcium- oder Zinksalze (Kunststoffe 47, 389 (1957), langkettige aliphatische Ester (DAS 1 081 218), Fettalkohole und andere mehr (Kunststoff-Handbuch Band VI, Polyamide, Carl Hanser Verlag, München 1966). Sie weisen alle bestimmte Nachteile auf, z.B. ungenügende Wirkung, in größeren Mengen starke Unverträglichkeit oder Molekulargewichtsabbau, aufwendige Einarbeitung (Flüssigdosierung) und andere mehr.

Es besteht daher ein Bedarf an sehr gut fließenden Polyamidformmassen.

Überraschend wurde nun gefunden, daß Polyamid-Formmassen, die geringe Mengen spezieller Amide und/oder Harnstoffe enthalten, ein drastisch verbessertes Fließverhalten aufweisen, ohne die oben genannten Nachteile mit zubringen.

Gegenstand der Erfindung sind daher neue, leicht fließende Polyamidformmassen, dadurch gekennzeichnet, daß sie zu

A) 85 bis 99,9 Gew.-% aus an und für sich bekannten Polyamiden,

B) 0,1 bis 15 Gew.-% aus Amiden und/oder Harnstoffen der allgemeinen Formeln (I) bis (IV),

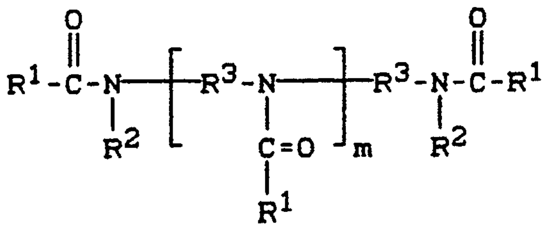

(I)

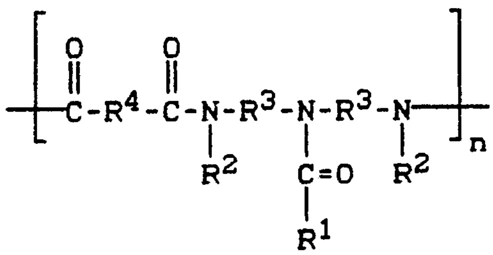

(II)

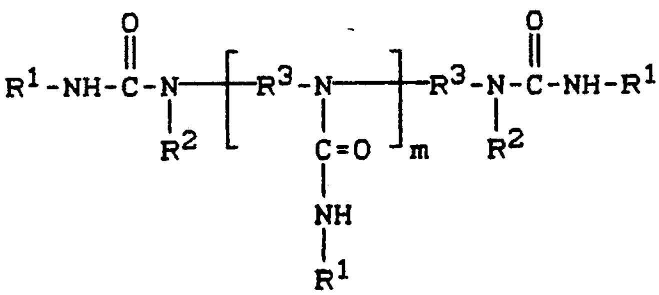

(III)

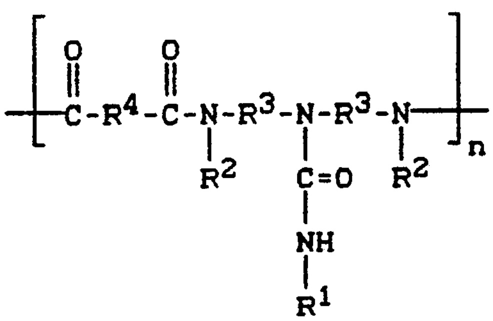

(IV)

wobei

$R^1$

unabhängig voneinander einen (ar)aliphatischen Kohlenstoffrest mit mindestens 5, bevorzugt mindestens 10 C-Atomen,

$R^2$

unabhängig voneinander Wasserstoff oder Reste der Formeln (V) und (VI),

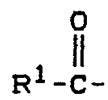 (V)

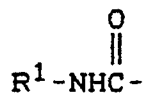 (VI),

bevorzugt Wasserstoff,

$R^3$, $R^4$

unabhängig voneinander einen bivalenten Kohlenstoffrest mit 2 bis 10 Kohlenstoffatomen, der auch Heteroatome enthalten kann und linear oder verzweigt, offenkettig oder cyclisch, aliphatisch oder aromatisch ist, bevorzugt aber einen Alkylenrest mit 2 bis 6 C-Atomen und insbesondere im Fall von $R_3$ $-C_2H_4-$ bzw. im Fall von $R_4$ $-C_4H_8$,

m

eine ganze Zahl von 1 bis 50, bevorzugt 1 bis 10, insbesondere 3 - 10,

n

eine ganze Zahl, derart gewählt, daß das mittlere Molekulargewicht ($\overline{M}_n$) der den Verbindungen der Formeln (II) und (II) zugrundeliegenden Polyamidamine mindestens 500, bevorzugt mindestens 1000 und nicht mehr als 50000 g $mol^{-1}$ beträgt,

bedeuten, und wobei die Additive der Formeln (II) und (IV) beliebige Endgruppen (z.B. Amin oder Carboxyl) aufweisen können, sowie gegebenenfalls

C) bis 200 Gew.-%, bezogen auf die Summe der Gewichte von A) und B), an üblichen Zusatzstoffen bestehen.

Gegenstand der Erfindung ist auch ein Verfahren zur Herstellung der neuen Polyamidformmassen sowie ihre Verwendung zur Herstellung von Formkörpern, Folien, Fasern, Halbzeugen, Verbundwerkstoffen und anderen Gegenständen.

Die Additive B) der Formeln (I) bis (IV) leiten sich ab von Polyaminen der allgemeinen Formel (VII)

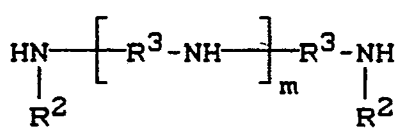 (VII)

bzw. Polyamidaminen der allgemeinen Formel (VIII)

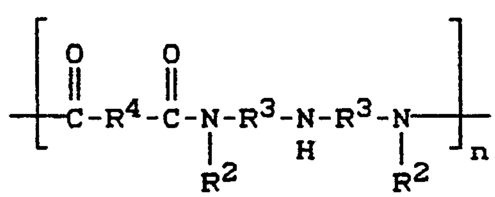 (VIII)

Die Additive können durch Umsetzen der Polyamine (VII) bzw. Polyamidamine (VIII) mit Carbonsäure(derivate)n bzw. Harnstoff-bildenden Verbindungen, bevorzugt Isocyanaten, in Lösung oder in der Schmelze hergestellt werden.

Sie sind prinzipiell bekannt oder können nach prinzipiell bekannten Verfahren hergestellt werden. Spezifische Beispiele für Verbindungen der Formeln (I) bis (IV) sind

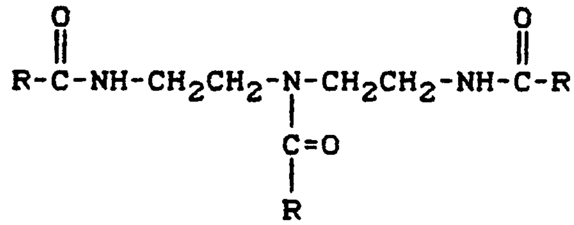

R =

$C_{12}H_{25}$ 1
$C_{15}H_{31}$ 2
$C_{17}H_{35}$ 3
$C_{22}H_{45}$ 4

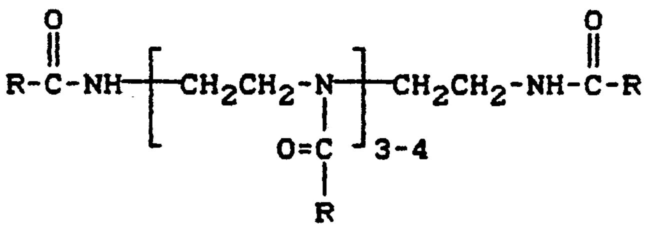

R =

$C_{12}H_{25}$ 5
$C_{15}H_{31}$ 6
$C_{17}H_{35}$ 7
$C_{22}H_{45}$ 8

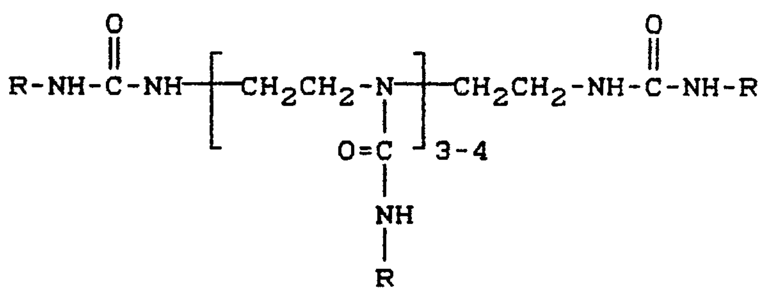

R =

$C_{12}H_{25}$ 9
$C_{15}H_{31}$ 10
$C_{17}H_{35}$ 11
$C_{22}H_{45}$ 12

R

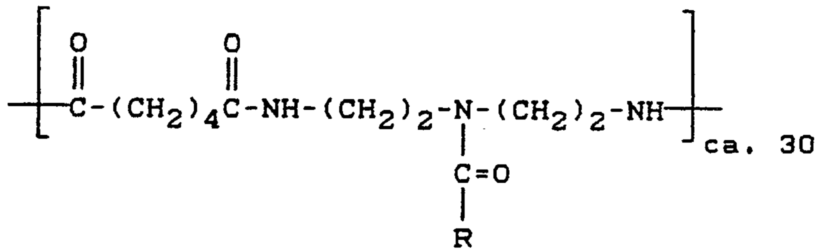

=

$C_{12}H_{25}$ 13
$C_{15}H_{31}$ 14
$C_{17}H_{35}$ 15
$C_{22}H_{45}$ 16

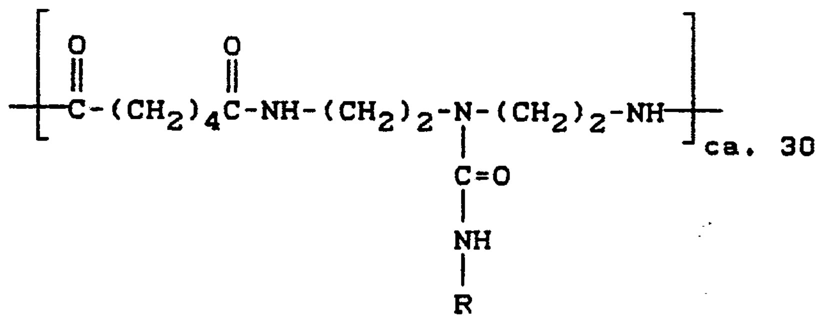

R=

$C_{12}H_{35}$ 17
$C_{15}H_{31}$ 18
$C_{17}H_{33}$ 19
$C_{22}H_{45}$ 20

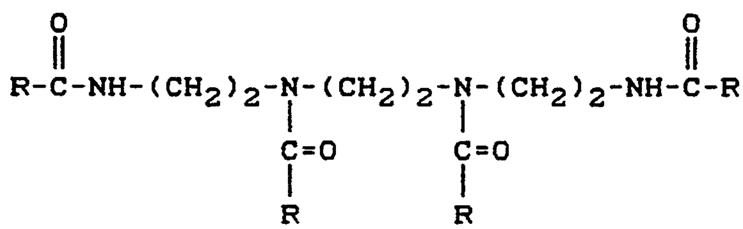

R =

$C_{12}H_{25}$ 21
$C_{15}H_{31}$ 22
$C_{17}H_{35}$ 23
$C_{22}H_{45}$ 24

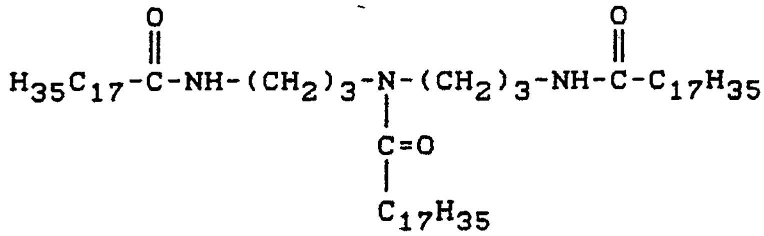 25

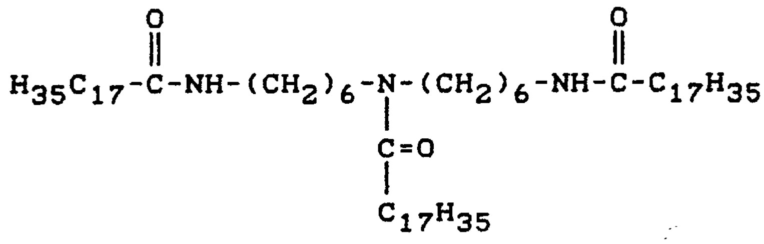 26

Zur Herstellung der Additive B) der Formeln (I) bis (IV) können prinzipiell alle Methoden zur Herstellung von Amiden bzw. Harnstoffen, ausgehend von Aminen, angewendet werden, wie sie dem Fachmann bekannt sind.

Bevorzugt werden die Additive der Formeln (I) und (II) aus den jeweilige Polyaminen der Formeln (VII) bzw. (VIII) durch Amidierung mit Carbonsäuren in der Schmelze, gegebenenfalls unter Einsatz üblicher Katalysatoren, hergestellt. Dazu sind Temperaturen von ca. 160° C bis ca. 280° C, je nach Additiv, geeignet. Die Additive der Formeln (I) und (II) können einen Teil, vorzugsweise weniger als 50 Mol-%, insbesondere weniger als 25 Mol-%. der Säuren, statt als Amid auch in Form der Salze aus Polyaminen und Säuren enthalten, Es können auch Gemische von Säuren eingesetzt werden, Es können zu einem Teil auch Carbonsären bzw. Carbonsäurederivate mit weniger als 5 C-Atomen, z.B. Essigsäure, eingesetzt werden, wobei aber die Carbonsäurereste $R_1$ überwiegen sollen.

Es können im Falle der Verbindungen (I) beispielsweise auch zuerst mit einer Säure z.B. die primären, anschließend mit einer zweiten die sekundären Aminogruppen amidiert werden.

Geeignet als Säuren, von denen sich die Reste $R^1$ ableiten, sind beispielsweise Laurinsäure, Myristinsäure, Hexadecansäure (Palmitinsäure), Octadecansäure (Stearinsäure) und Docosansäure (Behensäure). Diese sind gleichzeitig die bevorzugten Säuren.

Bevorzugte Polyamine (III) sind Diethylentriamin und seine höheren Homologen, Dipropylentriamin und Bishexamethylentriamin.

Die Additive der Formeln (I) und (II) können auch durch Umsetzung der Carbonsäuren bzw, geeigneter Derivate, z.B. der Säurechloride, mit den Verbindungen der Formeln (VII) und (VIII) in Lösung hergestellt werden. Verfahren dafür sind bekannt.

Die Additive der Formeln (I) und (II) können auch noch in geringem Maße überschüssige Carbonsäure- und/oder Amingruppen enthalten. Zu einem gewissen Anteil (<20 %) können auch tertiäre Amingruppen oder Ringe, aus den Polyaminen (VII) stammend, in den Verbindungen (I) und (III) anwesend sein.

Die Verbindungen der Formeln (III) und (IV) werden aus den Aminen der Formeln (VII) und (VIII) durch Reaktion mit Harnstoff bildenden Reagenzien, bevorzugt Isocyanaten, hergestellt. Als Isocyanate sind solche der Formel $R^1$-N=C=O geeignet, wobei $R^1$ die schon genannte Bedeutung hat. Die Reaktion wird bevorzugt in Lösung durchgeführt. Verfahren hierfür sind bekannt.

Die Polyamidamine der Formel (VIII) können neben der Dicarbonsäure und dem Triamin noch weitere polyamidbildende Bausteine, bevorzugt Caprolactam, enthalten. Das Triamin kann auch ganz oder teilweise gegen höhere Polyamine ersetzt werden. Bevorzugt sind die Verbindungen der Formel (VIII) aus Adipinsäure und Diethylentriamin sowie gegebenenfalls zusätzlich Caprolactam aufgebaut.

Herstellungsbeispiele für erfindungsgemäß einzusetzende Additive finden sich im Beispielteil. Ansonsten sei zur Herstellung der Additive auf die eigene, bisher unveröffentlichte Anmeldung P 3 921 259.9 (Le A 26 941) verwiesen.

Die Additive sind zu 0,1 bis 15, bevorzugt 0,5 bis 8 und besonders bevorzugt 1 bis 5 Gew.-% in den fertigen Formmassen enthalten.

Die erfindungsgemäß einzusetzenden Verbindungen sind entweder als solche bekannt oder können nach bekannten Verfahren hergestellt werden, Sie können einzeln oder in einem beliebigen Gemisch

eingesetzt werden.

Zusätzlich zu den Verbindungen der Formeln (I) bis (IV) können die Polyamidformmassen noch Zusatzstoffe gemäß C) enthalten, beispielsweise Füll- und/oder Verstärkungsstoffe (Glasfasern, Glaskugeln, Aramidfasern, Kohlenstoffasern, mineralische Füllstoffe etc,), Weichmacher, weitere Fließhilfsmittel, UV-Stabilisatoren, Antioxidantien, Pigmente, Farbstoffe, Entformungsmittel, Antiweichmacher, die Wasseraufnahme verringernde Zusätze (bevorzugt Monophenole, Bisphenole wie z.B. Bisphenol A sowie (Alkyl-)Phenol-Formaldehyd-Novolake), Nukleiermittel, Kristallisationsbeschleuniger und -verzögerer sowie polymere Legierungspartner (z.B. die literaturbekannten Schlagzähmodifikatoren u.a.m.). Sie können allein oder als Konzentrate eingesetzt werden.

Als zusätzliche Fließhilfsmittel sind insbesondere die niedermolekularen, flüssigkristallinen Additive gemäß der eigenen unveröffentlichen Patentanmeldung P 3 914 048.2 (Le A 26 824) geeignet.

Als polymere Legierungspartner kommen z.B. in Betracht: Dienkautschuke, Acrylat-Kautschuke, Polyethylene, Polypropylene, Ethylen-Propylen-Copolymere, Ethylen-1-Buten-Copolymere, Ethylen-Propylen-Dien-Terpolymere, Ethylen-Acrylsure/Acrylester-Terpolymere, Ethylen-Vinylacetat-Copolymere, Polyoctenylene, Polystyrole, (α-Methyl)-styrol-(Meth)-acrylnitrilcopolymere, (Meth)Acrylnitril-Butadien-(α-methyl)styrol-Polymere (ABS), schlagzähe Polystyrole, Polycarbonate, aromatische Polyester-(carbonate), Polyester wie z.B. Polyethylenterephthalat, Polysulfone, Polyphenylenoxide, Polyetherketone, Polyetheretherketone, Polyamidimide, Polyethersulfone, Polyetherimide, Polyesterimide und Polyimide, wie sie im Stand der Technik als Legierungspartner bzw. Modifikatoren bekannt sind.

Die polymeren Legierungspartner sollten, wenn nötig, gegebenenfalls zumindest teilweise, chemisch so modifiziert sein, daß eine partielle Ankopplung der beiden Phasen erfolgt. Dies kann z.B. dadurch geschehen, daß ein Copolymer aus Ethylen und/oder Propylen und geringen Mengen Acrylsäure, oder ein mit geringen Mengen Maleinsäureanhydrid gepfropftes Ethylen-Propylen(Dien)-Polymer oder ein mit geringen Mengen Maleinsäureanhydrid gepropftes Polyphenylenoxid, allein oder im Gemisch mit unmodifizierten Legierungspartnern, eingesetzt wird. Ankopplung kann auch über Ester- und Epoxidgruppen erfolgen. Es kann weiter z.B. dadurch geschehen, daß geeignete niedermolekulare oder polymere Verträglichkeitsvermittler anwesend sind, z.B. kann in Legierungen mit ABS ein Acrylnitril-Styrol-Acrylsäure-Terpolymer als Verträglichkeitsvermittler eingesetzt werden. Die Legierungspartner können auch reaktive Endgruppen aufweisen, welche mit dem Polyamid reagieren können, z.B. Amino- oder Carboxyl-terminierte Polydien-Kautschuke.

Die Kautschuke können auch in einer Kern-Mantel-Struktur gepfropft sein.

Es können erfindungsgemäß auch Gemische von Polyamiden mit anderen Polymeren und/oder Legierungspartnern hergestellt werden, z.B. Legierungen aus FA 66, Polyphenylenoxid und schlagzähem Polystyrol oder Legierungen aus PA 66, aromatischen Polyestern und Schlagzähmodifikatoren oder auch Legierungen aus Polyamid 6, (Meth)-acrylnitril/(α-Methyl)-Styrol-Copolymeren und Polybutadien-bzw. Acrylat-Pfropfkautschuken, wie sie im Stand der Technik als Schlagzähmodifikatoren beschrieben sind.

Auch mit erfindungsgemäß einzusetzenden Polyamiden verträgliche und/oder unverträgliche amorphe Polyamide können als Zusatzstoff eingesetzt werden; z.B. können als amorphe Polyamide PA 6 I (Polyhexamethylenisophthalamid) oder auch Polyamide aus Icophthalsäure, Terephthalsäure, Hexamethylendiamin und gegebenenfalls 4,4'-Diaminodicyclohexylmethan eingesetzt werden.

In Mischungen und/oder Legierungen, in welchen zusätzlich zu den erfindungsgemäß einsetzbaren Polyamiden noch weitere Polymere zugesetzt werden, sollte der Anteil der erfindungsgemäß einzusetzenden Polyamide (z.B. PA 6, 66 und Copolyamide derselben) nicht geringer als ungefähr 40 Gew.-% sein, bevorzugt nicht niedriger als ungefähr 50 Gew.-%.

Bevorzugte Legierungspartner sind solche, die üblicherweise zur Erhöhung der Kälte- und/oder Trokkenschlagzähigkeit eingesetzt werden (Schlagzähmodifikatoren) sowie amorphe Thermoplaste mit Glastemperaturen von mindestens 90 °C, bevorzugt mindestens 120 °C und besonders bevorzugt mindestens 140 °c.

Erfindungsgemäß sind als Polyamide gemäß A) teilkristalline und amorphe Polyamide oder Mischungen derselben geeignet. Bevorzugt sind PA 6, 66, 6T/6, 610, 1212, 11, 12, 46, sowie Mischpolyamide auf Basis von PA 6 und PA 66.

Besonders bevorzugt sind PA 6, 66 oder ihre Mischungen sowie Copolyamide auf Basis PA 6 und 66.

Die Herstellung der erfindungsgemäßen Polyamidformmassen erfolgt durch Mischen der Komponenten in der Schmelze, bevorzugt in Knetern oder Extrudern. Alle zur Abmischung von Thermoplasten üblichen Verfahren können angewendet werden.

Die erfindungsgemäßen Polyamid-Formmassen können z.B. nach den Verfahren des Spritzgießens, der Extrusion, der Pultrusion, des "film-stacking" u.a.m. zu Formkörpern, Folien, Fasern, Halbzeugen, Verbundwerkstoffen und anderen Gegenständen verarbeitet werden. Diese sind ebenfalls Gegenstand der Erfindung.

Die erfindungsgemäßen Polyamid-Formmassen weisen eine signifikant erhöhte Fließfähigkeit auf.

Aufgrund des hohen Molekulargewichts der erfindungsgemäß einzusetzenden Additive B) sind diese nicht flüchtig. Sie sind i.a. Feststoffe und von daher einfach dosierbar. Sie stellen somit eine wertvolle Bereicherung des Standes der Technik dar.

Die folgenden Beispiele mit typischen Einsatzstoffen in typtischen Mengen dienen zur Erläuterung der Erfindung, ohne sie darauf einzuschränken.

$\eta_{rel}$-Werte wurden in m-Kresol bei 25 °C anhand einer einprozentigen Lösung bestimmt. Prozentangaben beziehen sich, sofern nicht anders angegeben, auf das Gewicht.

Beispiel 1

Herstellung von N, N', N"-Trisstearoyl-diethylentriamin 3 durch Schmelzamidierung (zur erfindungsgemäßen Verwendung)

154,5 g Diethylentriamin, 1280 g Stearinsäure und 0,3 g Triphenylphosphit wurden unter $N_2$ eine Stunde lang bei 180 bis 22 °C und anschließend 4,5 Stunden lang bei 260 °C gerührt. Nach Abkühlen wurde aus Toluol umkristallisiert. Die Ausbeute betrug 1165 g gelbliche Kristalle vom Fließpunkt 103 bis 105 °C. Der Gehalt an basischem Stickstoff betrug 0,11 %, der an Carboxylgruppen 0,27 %.

Beispiel 2

Herstellung eines mit Stearinsäure durchamidierten Polyamins 7 durch Schmelzamidierung (zur erfindungsgemäßen Verwendung)

25 g eines Polyethylenpolyamin-Gemisches, das als Hauptkomponenten Tetraethylenpentamin und Pentaethylenhexamin enthält (Polyamin B, ein Produkt der Bayer AG), 156 g Stearinsäure und 0,1 g Triphenylphosphit wurden in Analogie zu Beispiel 1 bei 180 bis 220 °C (1 h) und 260 °C (5 h) umgesetzt. Nach Umkristallisation aus Toluol wurden 110 g hallbraune Kristalle vom Schmelzpunkt 90 bis 101 °C erhalten. Der Gehalt an basischem Stickstoff betrug 0,56 %, der an Carboxylgruppon 0,27 %.

Beispiele 3 bis 5 und Veraleichsbeispiel 1

Das Amid nach Beispiel 1 wurde über einen ZSK 53-Doppel-wellenextruder mit Polyamid 6-Granulat ($\eta_{rel}$ ca. 4,0) bei verschiedenen Temperaturen extrudiert. Der Durchsatz betrug 30 kg $h^{-1}$.

Die Verbesserung der Fließfähigkeit wurde anhand der Arbeitsaufnahme des Extruders bestimmt.

Beispiele 6 bis 9 und Vergleichsbeispiel 2

Das in den Beispielen 3 bis 5 benutzte PA 6-Granulat wurde bei 270 °C mit dem nach Beispiel 1 hergestellten Triamid 3 sowie einem Amid auf Basis Triethylentetramin, Stearinsäure und wenig Essigsäure (Persoftal UK, ein Produkt der Bayer AG) wie vorher beschrieben extrudiert.

Die Arbeitsaufnahmewerte finden sich in Tabelle 1.

Tabelle 1

| Beispiel | Amid | Menge (Gew.-%) | $A^1$ / (A) bei T (°C) | $\eta_{rel}$ |
|---|---|---|---|---|
| 3 | 3 | 2 | 28 / 270 | 3,95 |
| 4 | 3 | 5 | 20 / 250 | 3,8 |
| 5 | 3 | 10 | 14 / 240 | 3,7 |
| Vergl. 1 | - | - | 52 / 270 | 4,0 |
| 6 | 3 | 2 | 40 / 270 | 4,0 |
| 7 | 3 | 5 | 24 / 270 | 4,0 |
| 8 | Persof-thal UK | 2 | 26 / 270 | 3,9 |
| 9 | " | 5 | 18 / 270 | 3,7 |
| Vergl. 2 | - | - | 68 / 270 | 4,0 |

1) Arbeitsaufnahme, niedrigere Werte bedeuten bessere Fließfähigkeit

Beispiele 10 bis 13 und Vergleichsbeispiel 3

In der für die Beispiele 6 bis 9 beschriebenen Weise wurden dieselben Verbindungen mit einem hochmolekularen PA 6 ($\eta_{rel}$ ca. 5) extrudiert (Durchsatz = 24 kg $h^{-1}$).

Die Daten für die Arbeitsaufnahme sind in Tabelle 2 verzeichnet.

Tabelle 2

| Beispiel | Amid | Menge (Gew.-%) | A / (A) bei T (°C) | $\eta_{rel}$ |
|---|---|---|---|---|
| 10 | 3 | 2 | 24 / 275 | 4,4 |
| 11 | 3 | 5 | 14 / 270 | 4,5 |
| 12 | Persofthal UK | 2 | 14 / 270 | 4,4 |
| 13 | " | 5 | 12 / 270 | 4,2 |
| Vergl. 3 | - | - | 70 / 280 | 4,6 |

Beispiele 14 und 15 und Vergleichsbeispiel 4

In der für die Beispiele 3 bis 5 beschriebenen Weise wurde ein niederviskoses PA 6 ($\eta_{rel}$ = 2,9) mit den in den vorhergehenden Beispielen benutzten Verbindungen extrudiert.

Die Daten für die Arbeitsaufnahme sind in Tabelle 3 verzeichnet.

Tabelle 3

| Beispiel | Amid | Menge (Gew.-%) | A / (A) bei T (°C) | $\eta_{rel}$ |
|---|---|---|---|---|
| 14 | 3 | 2 | 23 / 230 | 3,0 |
| 15 | Persofthal UK | 2 | 23 / 230 | 2,9 |
| Vgl. 4 | - | - | 35 / 240 | 3,0 |

Beispiele 16 bis 19 und Veraleichsbeispiel 5 bis 7

In der für die Beispiele 6 bis 9 beschriebenen Weise wurden ein mittelviskoses PA 6 ($\eta_{rel}$ = 3,5), das Amid 3 und polyphenolicche Verbindungen trocken vermischt und extrudiert (260° C)

Die Daten für die Arbeitsaufnahme dieser Proben sowie solcher ohne das Amid 3 sind in Tabelle 4 zusammengestellt.

Tabelle 4

| Beispiel | Amid 3 (%) | Polyphenol | Menge (%) | A (A) | $\eta_{rel}$ |
|---|---|---|---|---|---|
| 16 | 1 | Novolak[1)] | 10 | 24 | 3,15 |
| 17 | 2 | Novolak[1)] | 10 | 20 | 3,0 |
| 18 | 1 | Bisphenol A | 10 | 22 | 3,15 |
| 19 | 2 | Bisphenol A | 10 | 18 | 3,1 |
| Vgl. 5 | - | Novolak[1)] | 10 | 27 | 3,2 |
| Vgl. 6 | - | Bisphenol A | 10 | 23 | 3,1 |
| Vgl. 7 | - | - | - | 54 | 3,6 |

1) Phenol-Formaldehyd-Kondensat (Phenol:$CH_2O$ = 1:0,78)

Wie die Beispiele zeigen, sind die erfindungsgemäß einzusetzenden Additive sehr gute Fließhilfen, welche schon in sehr geringen Mengen wirken.

Darüber hinaus können sie auch als Kristallisationsverzögerer wirken, wie Tabelle 5 zeigt. Dies kann sich dann durch verbesserte Oberflächen von Formkörpern aus-wirken.

Tabelle 5[1)]

| Beispiel | $T_s$ (°C) | $\Delta H_s$ (I/g) | $T_k$ (°C) | $\Delta H_K$ (g/g) |
|---|---|---|---|---|
| 19 | 214,0 | 55,5 | 163,5 | 54,7 |
| Vgl. 6 | 215,7 | 55,5 | 165,2 | 57,4 |
| Vgl. 7 | 220,6 | 61,3 | 172,1 | 61,7 |

1) bestimmt durch DSC (Heizrate: 20 K $min^{-1}$; Kühlrate: 40 K $min^{-1}$)

Beispiel 20 und Vergleichsbeispiel 8

PA 66 ($\eta$rel = 3,0) wurde mit Glasfasern (30 % bezogen auf Compound) und 2 % (bezogen auf

Compound) des Amids nach Beispiel 2 (Beispiel 20) bzw. 0,3 % (bezogen auf Compound) eines Polyethylenwachses (Hostalub WE 1, ein Produkt der Höchst AG) (Vergleichsbeispiel 8) compoundiert (ZSM 53).

Mechanische Eigenschaften und Fließlängen sind in Tabelle 6 zusammengestellt.

Tabelle 6

| | Beispiel 20 | Vergleichsbeispiel 8 |
|---|---|---|
| Aschegehalt (% | 28,8 | 28,3 |
| $\sigma_R$ (MPa) | 179 | 183 |
| $\varepsilon_R$ (%) | 3,0 | 3,17 |
| $E_z$ (MPa) | 9451 | 9407 |
| $\sigma_{B3,5}$ (MPa) | 257 | 258 |
| $\sigma_B$ (MPa) | 274 | 282 |
| $E_B$ (MPa) | 8308 | 8269 |
| $a_K$ 1) (KJ/m$^2$ | 10,7 | 10,9 |
| $a_n$ 1) (KJ/m$^2$ | 51,3 | 53,6 |
| -30° C | 46,0 | 46,2 |
| HDT A (° C) | 254 | 253 |
| HDT B (° C) | >254 | >253 |
| Fließlänge 2) (cm) bei [280° C] | 74 | 58 |

1) ISO 180; $a_K$: Methode 1A; $a_n$ = Methode 1c

2) Maß für die Fließfähigkeit. Höhere Werte bedeuten bessere Fließfähigkeit.

## Patentansprüche

1. Leicht fließende Polyamidformmassen, dadurch gekennzeichnet, daß sie zu
   A) 85 bis 99,9 Gew.-% aus an und für sich bekannten Polyamiden,
   B) 0,1 bis 15 Gew.-% aus Amiden und/oder Harnstoffen der allgemeinen Formeln (I) bis (IV),

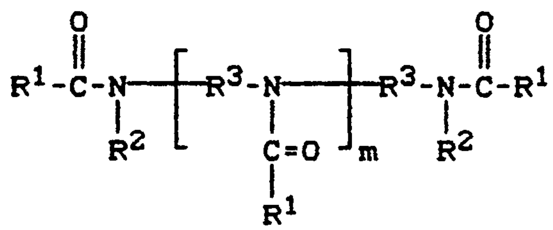

(I)

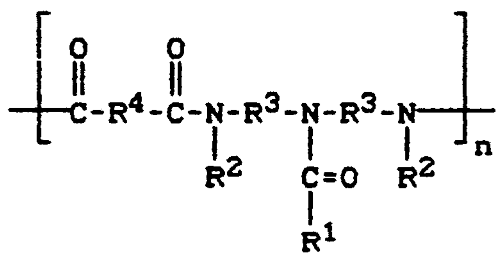

(II)

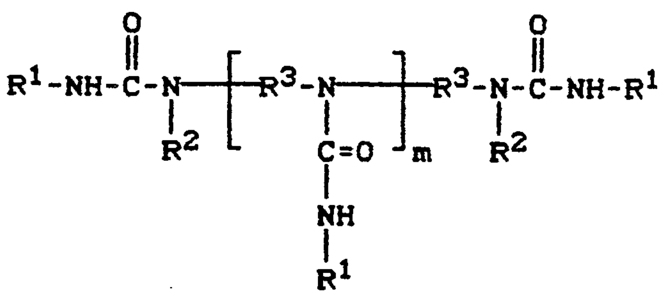

(III)

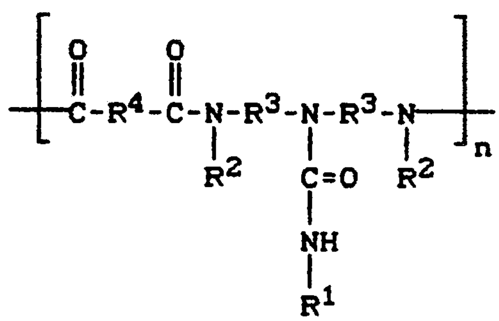

(IV)

wobei

$R^1$

unabhängig voneinander einen (ar)aliphatischen Kohlenstoffrest mit mindestens 5, bevorzugt mindestens 10 C-Atomen,

$R_2$

unabhängig voneinander Wasserstoff oder Reste der Formeln (V) und (VI),

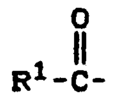 (V)

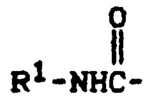 (VI),

bevorzugt Wasserstoff,

$R^3$, $R^4$

unabhängig voneinander einen bivalenten Kohlenstoffrest mit 2 bis 10 Kohlenstoffatomen, der auch Heteroatome enthalten kann und linear oder verzweigt, offenkettig oder cyclisch, aliphatisch oder aromatisch ist, bevorzugt aber einen Alkylenrest mit 2 bis 6 C-Atomen und insbesondere im Fall von $R_3$ $-C_2H_4-$ bzw. im Fall von $R_4$ $-C_4H_8$,

m

eine ganze Zahl von 1 bis 50, bevorzugt 1 bis 10, insbesondere 3 bis 10.

n

eine ganze Zahl, derart gewählt, daß das mittlere Molekulargewicht ($\overline{M}_n$) der den Verbindungen der Formeln (II) und (IV) zugrundeliegenden Polyamidamine mindestens 500, bevorzugt mindestens 1000 und nicht mehr als 50000 g $mol^{-1}$ beträgt,

bedeuten, und wobei die Additive der Formeln (II) und (IV) beliebige Endgruppen (z.B. Amin oder Carboxyl) aufweisen können, sowie gegebenenfalls

C) bis 200 Gew.-%, bezogen auf die Summe der Gewichte von A) und B), an üblichen Zusatzstoffen bestehen.

2. Polyamidformmassen nach Anspruch 1, dadurch gekennzeichnet, daß die Verbindungen der Formeln (I) bis (IV) bevorzugt zu 0,5 bis 8 Gew.-% und besonders bevorzugt zu 1 bis 5 Gew.-% eingesetzt werden.

3. Polyamidformmassen nach Ansprüchen 1 und 2, dadurch gekennzeichnet, daß u.a. insbesondere die Verbindungen 1 bis 26 als Additive B) eingesetzt werden.

4. Polyamidformmassen nach Ansprüchen 1-3, dadurch gekennzeichnet, daß bevorzugt die Verbindungen der Formel (I) und (III), besonders bevorzugt der Formel (I), eingesetzt werden, wobei die Reste $R_1$ bevorzugt aliphatische Reste mit mindestens 12 C-Atomen, insbesondere die Reste $C_{12}H_{35}$, $C_{15}H_{31}$, $C_{17}H_{35}$, $C_{20}H_{41}$, $C_{21}H_{43}$ und $C_{22}H_{45}$, allein oder im Gemisch sind, und wobei auch Säuren mit einer geringeren C-Zahl als 6, z.B. Essigsäure u.a.m., mitverwendet werden können.

5. Polyamidformmassen nach Ansprüchen 1-4, dadurch gekennzeichnet, daß besonders bevorzugt PA 6, PA 66 oder ihre Mischungen sowie Copolyamide auf Basis PA 6 bzw. 66 verwendet werden.

6. Polyamidformmassen nach Ansprüchen 1-4, dadurch gekennzeichnet, daß als Zusatzstoffe C) insbesondere Verstärkungsstoffe (Glasfasern, mineralische Füllstoffe etc.), polymere Legierungspartner (insbesondere Schlagzähmodifikatoren), weitere Fließhilfen, übliche Gleit- und Entformungsmittel, Pigmente bzw.Farbstoffe, UV-Stabilisatoren, Antioxidantien,phenolische Verbindungen zur Reduktion der Wasseraufnahme (insbesondere Bisphenole und (Alkyl)-Phenol-Formaldehyd-Kondensate), und Flammschutzmittel eingesetzt werden, allein oder in Kombination.

7. Verfahren zur Herstellung von leichtfließenden Polyamidformmassen aus hochmolekularen Polyamiden unter Zusatz von Fließverbesserern, dadurch gekennzeichnet, daß

A) 85 bis 99,9 Gew.-% hochmolekulare Polyamide mit

B) 0,1 bis 15 % Amiden und/oder Harnstoffen der allgemeinen Formeln (I) bis (IV) entsprechend Anspruch 1,

gegebenenfalls mit Zusätzen bis 200 Gew.-%, bezogen auf die Summe der Gewichte von A) und B), an üblichen Zusatzstoffen C) miteinander in der Schmelze, in einem oder in mehreren Schritten, vermischt

werden.

8. Verwendung der leichtfließenden Polyamidformmassen nach Ansprüchen 1 bis 6 zur Herstellung von Formkörpern, Folien, Fasern, Halbzeugen, Verbundwerkstoffenund anderen Gegenständen, nach Verfahren des Spritzgießens, der Extrusion, der Pultrusion, des "film-stacking" und anderer bekannter Verfahren der Verarbeitung aus der Schmelze.

9. Formkörper, Folien, Fasern, Halbzeuge, Verbundwerkstoffe und andere Gegenstände aus Polyamidformmassen nach Ansprüchen 1-6.